# EUROPÄISCHE PATENTSCHRIFT

(11) **EP 1 044 398 B1**
(45) Veröffentlichungstag und Bekanntmachung des Hinweises auf die Patenterteilung: **05.04.2006**
(21) Anmeldenummer: 99960813.6
(22) Anmeldetag: 26.10.1999
(51) Int. Cl.: G05D 1/00, B64C 39/02

(54) **FERNLENKVERFAHREN FÜR EIN UNBEMANNTES LUFTFAHRZEUG**
METHOD FOR REMOTE-CONTROLLING AN UNMANNED AERIAL VEHICLE
PROCEDE DE TELEGUIDAGE D'UN AERONEF INHABITE

(30) Priorität: 29.10.1998 DE 19849857
(43) Veröffentlichungstag der Anmeldung: 18.10.2000
(73) Patentinhaber: EADS Deutschland GmbH, 85521 Ottobrunn (DE)
(72) Erfinder: SCHWÄRZLER, Hans-Jürgen, D-82024 Taufkirchen (DE)
(86) Internationale Anmeldenummer: PCT/DE1999/003407
(87) Internationale Veröffentlichungsnummer: WO 2000/026734

(56) Entgegenhaltungen:
- FR-A- 2 721 458
- US-A- 5 015 187
- US-A- 5 240 207
- PATENT ABSTRACTS OF JAPAN vol. 1997, no. 10, 31. Oktober 1997 (1997-10-31) & JP 09 142395 A (YANMAR AGRICULT. EQUIP.), 3. Juni 1997 (1997-06-03)

## Beschreibung

Die Erfindung betrifft ein Fernlenkverfahren für ein unbemanntes Luftfahrzeug und ein unbemanntes Luftfahrzeug zur Durchführung des Fernienkverfahrens gemäß den Patentansprüchen 1 und 5.

Der Einsatz unbemannter Luftfahrzeuge (UAVs) stützt sich im wesentlichen auf vorprogrammierte Flugpfade, deren Planung die genaue Kenntnis des zu überfliegenden Geländes und der zu erwartenden Bedrohung durch Flugabwehr erfordert Insbesondere ist eine sehr genaue Kenntnis des Zielgebietes notwendig, um die Zielbekämpfung ausführen zu können. Dies geschieht oft zusätzlich mit Unterstützung von Endanflugsensoren, die mit Bildvergleich arbeiten. Sie erfordern daher genaue Bilder der Ziele, unter Umständen aus verschiedenen Perspektiven. Ein Reagieren auf unvorhergesehene Ereignisse ist mit programmgesteuerten Flügen nicht möglich.

Die Erfüllung derart schwieriger Aufgaben kann erheblich verbessert werden, wenn das UAV über Funkstrecken ferngelenkt geführt wird, wobei der "Pilot" in einer zurückversetzten Leitstation agiert. Die Leitstation kann sich entweder am Boden oder fliegend in einem bemannten Flugzeug befinden. Das Fernlenken erfolgt mit der Hilfe eines Fernsehbildes, das von einer Kamera im unbemannten UAV aufgenommen, zur Leitstation übertragen und dort in geeigneter Weise dargestellt wird (Predator; UAV Annual Report FY 1997, 6 November 1997, S.5)

Dieses an sich bekannte Verfahren hat den Nachteil, daß es auf die Zuverlässigkeit der Funkstrecke angewiesen ist. Ein Ausfall der Funkverbindung würde bekanntlich das UAV in eine unkontrollierte Flugphase bringen, in der es schließlich abstürzt.

Aus der FR-A-2 721 458 ist ein Fernlenkverfahren zur Steuerung eines unbemannten Luftfahrzeugs bekannt. Danach wird das Luftfahrzeug in einer ersten Phase seines Fluges, welche den Hinflug vom Start bis zum Erreichen seines vorgesehenen Zielpunktes umfaßt, über eine Drahtverbindung gesteuert, welche durch einen Draht realisiert ist, der von einer an dem Luftfahrzeug angebrachten Haspel abgespult wird. Nach dem Erreichen des Ziels und einem Abreißen der Drahtverbindung erfolgt zunächst ein automatischer Rückflug mittels eines an Bord vorgesehen vorprogrammierbaren Flugführungssystems. Bei Ankunft in der Nähe des Ausgangspunkts wird die Fernsteuerung über Funk durch eine Funkverbindung geringer Reichweite bis zum Abschluß der Landung übernommen.

Aus der US 5 240 207 sind Verfahren und Vorrichtung zur Fernlenkung eines unbemannten Luftfahrzeugs bekannt, bei denen das Luftfahrzeug von einer Leitstation aus über Funkstrecken gesteuert wird, wobei eine Bildübertragung vom UAV zur Leitstation erfolgt.

Der Erfindung liegt die Aufgabe zugrunde, bei einem ferngelenkten UAV das Eintreten eines unkontrollierten Fluges bei Ausfall der Funkverbindung zu vermeiden.

Diese Aufgabe wird erfindiingsgemäß durch die Merkmale des Patentanspruchs1 gelöst. Weiterbildungen der Erfindung sind in den Unteransprüchen angegeben.

Die Erfindung beruht darauf, daß bei Ausfall der Funkverbindung der Flug des UAVs mit einem an Bord errechneten Ersatzflugprogramm fortgesetzt wird.Dadurch kann in vorteilhafter Weise ein drohender Verlust des UAVs vermieden und ggf. der Einsatz trotz der Funkstörung erfolgreich beendet werden.

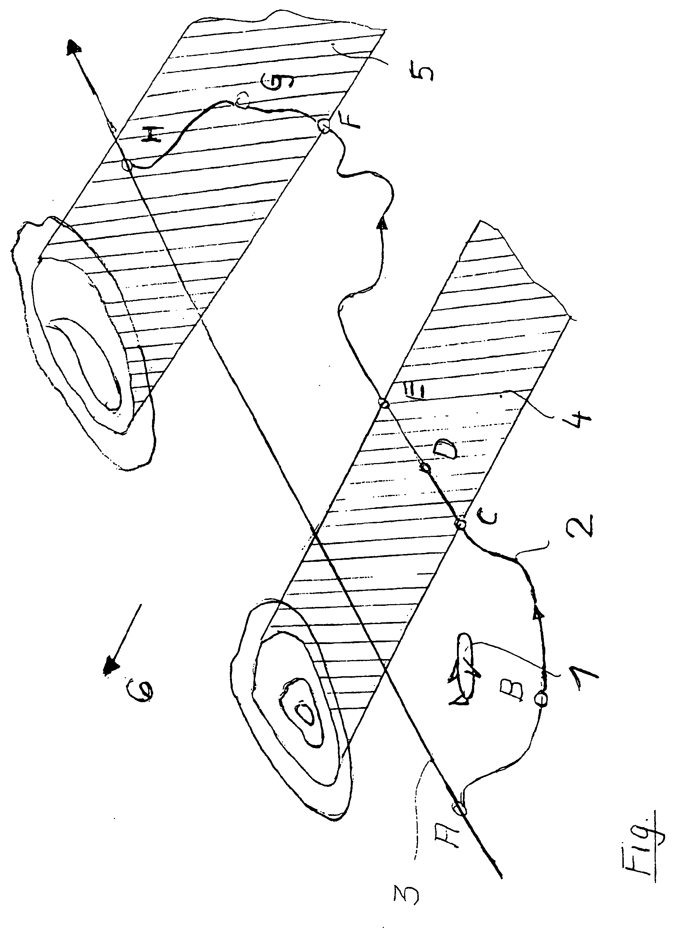

Anhand der Zeichnung wird ein Ausführungsbeispiel der Erfindung näher erläutert. Die Figur zeigt ausschnittsweise ein Szenario einer UAV-Mission mit der Darstettung einer ferngesteuerten Flugbahn 2 , einer vorprogrammierten Sicherheitroute 3 und sich aus der beispielhaften Geländeformation und Lage der Leitstation 6 im gezeigten Gelände ergebenden Schattenzonen 4 und 5.

Ein erfindungsgemäßer Verfahrensablauf ist mit seinen charakteristischen Punkten A bis G an der ferngesteuerten Flugbahn 2 markiert. Die den einzelnen Punkten zugeordneten Verfahrensschritte sind nachstehend angegeben:
A Beginn der Fernlenkung durch Eingriff in die Sicherheitsroute,
B Ferngelenkter Flug, überwacht durch ständige Extrapolation des momentanen Flugpfades.
C Einttritt in eine Schattenzone, drohender Beginn des unkontrollierten Fluges, Erkennen und Analyse der Unterbrechung,
D Fortsetzung des Fluges mit Ersatzflugprogramm, an Bord erzeugt,
E Übergabe an die Fernlenkung,
F Abbruch der Fernlenkung,
G Rückführen auf die Sicherheitsroute mit Ersatzflugpprogramm an Bord erzeugt,
H Fortsetzung des Fluges auf der Sicheheitsroute.

Beispielsweise folgt das UAV 1 zunächst automatisch einem vorprogrammierten Flugkurs auf einer Sicherheitsroute 3. Der "Pilot in der Leitstation 6 greift bei Bedarf in diesen vorprogrammierten Kurs ein. Damit verläßt das UAV den vorgegebenen Kurs und setzt seinen Flug entsprechend den übertragenen Kommandos auf der ferngelenkten Flugbahn 2 fort. In dieser Phase wird es abhängig von der kritischen Zuverlässigkeit der Funkverbindung. Fällt diese durch Abschattung oder Störung aus, ist erfindungsgemäß vorgesehen, den drohenden, unkontrollierten Flug mit einem Ersatzflugprogramm fortzusetzen, das an Bord erzeugt wird, nachdem die Unterbrechung erkannt und in ihrer Art unterschieden worden ist. Das Ersatzflugprogramm führt das UAV durch die Gefahrenzone bis es in ein Gebiet eintritt, in dem Funkverbindung besteht und ein Fernlenken wieder möglich ist.

Kann ein solches Gebiet nicht erreicht werden, soll ein automatischer Rückflug zu einem vorgesehenen Landeplatz ausgeführt werden, nachdem ein entsprechendes Flugprogramm an Bord neu errechnet wurde.

In einem weiteren Modus des Verfahrens ist vorgesehen, daß das UAV auf den vorgeplanten Kurs zurückkehrt und ein alternativ geplantes Ziel anfliegt, dort durch Ferneingriff in die Programmsteuerung die vom Piloten gewünschten Manöver ausführt und anschließend dem vorgeplanten Kurs folgend zum Landeplatz zurückkehrt.

Die voranstehend beschriebene Lösung der Aufgabe erfordert bestimmte Einrichtungen bzw. Funktionsabläufe, die nachstehend angegeben sind.

Das UAV 1 ist mit einem an sich bekannten, programmierbaren Flugführungssystem ausgestattet, das ihm ermöglicht, ein oder mehrere Zielgebiete autonom anzufliegen und zu einem vorgesehenen Landeplatz zurückzukehren. Erfindungsgemäß ist das automatische Flugführungssystem mit einer Schnittstelle für ein Eingreifen der Funkfernienkung ausgerüstet Diese bewirkt bei Eintreffen der Lenkkommandos, daß die Programmsteuerung unwirksam und die Fernlenkung jedoch wirksam wird. Das UAV führt damit die von der Leitstation 6 kommandierten Bewegungen aus.

Das automatische Flugfuhrungssystem besitzt eine an sich bekannte Geländedatenbank. Mit deren Hilfe orientiert sich das UAV während des automatischen Fluges im Gelände. Im ferngelenkten Flug überwacht mit diesen Daten ein mitgeführter Routenplaner ständig oder in Intervallen die Lenkvorgaben der Leitstation 6 hinsichtlich der Einhaltung von Mindesthöhen und Mindestabständen zu Hindernissen, um Kollisionen zu vermeiden. Dies geschieht dadurch, daß der Routenplaner aufgrund der Lenkbefehle den momentanen Flugpfad extrapoliert und mit den Daten der Geländedatenbank vergleicht.

Erkannte Gefahrensituationen werden der Leitstation umgehend gemeldet und dort angezeigt, oder es wird an Bord ein Antikollisionsprogramm errechnet und geeignte Korrekturmanöver werden automatisch ausgeführt.

Bei Ausfall der Funkverbindung ist eine Erkennung vorgesehen, die "Ausfall durch Abschattung" und "Ausfall durch Störung" unterscheidet. Der Erkennungssensor ist der Funkempfänger selbst, indem zwischen "kein Eingangssignal" und "vorliegendes Eingangssignal, aber nicht lesbarer Modulation" unterschieden wird.

Bei Ausfall durch Abschattung der Leitstation werden mittels Bordmitteln die höhenabhängigen Schattenzonen berrechnet; basierend auf dem mitgeführten Geländeprofil und den Koordinatenwerten x/y/z der Leitstation 6. Unter Verwendung der errechneten Daten über die Schattenzone erfolgt anschließend das Errechnen eines optimalen Flugweges im Gelände zum Durchfliegen der Schattenzone, ergänzt durch die Errechnung eines Übergabepunktes an die Fernlenkung am geplanten Austrittspunkt aus der Schattenzone.

Für einen Ausfall durch "Störung" des Empfängers wird mit Bordmitteln der Störer im Gelände geortet (Koordinatenwerte x/y). Der z-Koordinatenwert ergibt sich aus dem bekannten Geländeprofil. Aus den Ortungsdaten wird die höhenabhängige Störzone im Gelände errechnet. Bei bekannter Störzone wird dann ein optimaler Flugweg zum Durchfliegen der Störzone, ergänzt durch den Übergabepunkt an die Fernlenkung am Ende der Störzone errechnet.

Wird ein Übergabepunkt an die Fernlenkung nicht gefunden, oder ist das Fortsetzen des ferngelenkten Fluges nicht mehr interessant, erfolgt mit Bordmitteln das Errechnen einer Route zur Rückführung des UAVs auf die Sicherheitsroute und Fortsetzung der Mission zum nächsten, geplanten Zielgebiet. Ist kein weiteres Zielgebiet geplant, erfolgt der Abbruch der Mission und eine Routenplanung zum vorgeplanten Rückflugkurs. Alternativ kann eine Routenplanung zu einem neuen Rückflugkurs erfolgen, wenn dieser günstiger als der ursprünglich geplante ist.

Die Ersatzroutenplanung kann auch während der ungestörten Fernlenkphase vorbeugend ständig oder in Intervallen durchgeführt werden, um bereits bei Gefahreneintritt über ein errechnetes Ersatzflugprogramm zu verfügen

## Patentansprüche

1. Fernlenkverfahren zur Steuerung eines unbemannten Luftfahrzeugs (UAV) mittels eines an Bord vorgesehenen Funkempfängers über Funkstrecken aus einer Leitstation (6) heraus, bei dem eine Bildübernagung auf den Funkstrecken vom UAV (1) zur Leitstation (6) erfolgt, wobei das UAV (1) auch mittels eines bordeigenen vorprogrammierbaren Flugfiihnmgssystems automatisch steuerbar ist, und das UAV (1) wahlweise unter automatischer Steuerung durch das bordeigene Flugführungssystem auf einer vorprogrammierten Sicherheitsroute (3) geflogen oder bei Bedarf auf einer von der Leitsta tion (6) ferngelenkten Flugbahn (2) geführt werden kann, wobei bei einer Unterbrechung der Funkverbindung zwischen UAV (1) und Leitscation (6)der Flug unter Steuerung durch das bordeigene Flugfuhrungssystem auf einer mit Bordmitteln eaechneten, zur Sicherheitsroute (3) zurückführende Ersatzroute ohne aktiven Eingriff der Fernlenkung fortgesetzt wird, **dadurch gekennzeichnet, dass** eine Analyse der Funknnterbrechung anhand des Eingangssignals des Funkempfängers derart erfolgt, dass bei Nicht vorliegen eines Eingangssignals auf Abschattung und bei Vorliegen eines Bingangssignals, aber unlesbarer Modulation auf einen Störer erkannt wird, und dass je nach analysierter UnterbreGhungsursacize mit Hilfe eines in einer Geländedatenbank des Flugfiihrungssystems mitgefjibrten Geländeprofils eine geeignete Berechnungsroutine für die Ermittlung der zurückführenden Ersatzroute ausgewählt wird.

2. Fernlenkverfahren nach Anspruch 1, **dadurch gekennzeichnet, dass** die Analyse der Funkunterbrechung durch den Funkempfänger selbst vorgenommen wird.

3. Fernlenkverfahren nach einem der voranstehenden Ansprüche, **dadurch gekennzeichnet, dass** der berechnete momentane Flugpfad zusammen mit den berechneten, zu erwartenden Schatten- und Störzonen sowie der unmittelbar auftretende Störer an die Leitstation übermittelt und dort dargestellt werden.

4. Fernlenkverfahren nach einem der voranstehenden Ansprüche, **dadurch gekennzeichnet, dass** die Exsatzronte vorbeugend während der ununterbrochenen Funk verbindung-errechnet wird.

5. Unbemanntes Luftfahrzeug (UAV) mit einem bordeigenen, vorprognuomietbaren Flugführungssystem mit Funktionen zur Durchführung eines Fernleakverfahrens.zur Steuerung eines unbemannten LuAfahrzeugs (UAV) mittels eines an Bord vorgesehenen Funkempfängers über Funkstrecken aus einer Leitstation (6) heraus, bei dem eine Bildübertragung auf den Funkstrecken vom UAV (1) zur Leitstation (6) erfolgt, wobei das vorprogrammierte Flugführungssystem umfasst:
- eine Schnittstelle zum Eingreifen der von der Leitstelle (6) über den Funkempfänger ausgeführten Fernlenkung,
- Funktionen mit denen das Luftfahrzeug (UAV) automatisch steuerbar ist und mit denen bei einer Unterbrechung der Funkverbindung zwischen UAV (1) und Leitstation (6)der Flug unter Steuerung durch das bordeigene Flugfuhrungssystem auf einer mit Bordmitteln errechneten, zur Sicherheitsroute (3) zurückführende Eratzroute ohne aktiven Eingriff der Fernlenkung fortgesetzt wird.
**dadurch gekennzeichnet, dass** des vorprogrammierte Augführungssystem umfasst :
- Funktionen zur Analyse der Funkunterbrechung anhand des Eingangssignals des Funkempfängers derart, dass bei Nichtvorliegen eines Eingangssignals auf Abschattung und bei Vorliegen eines Eingangssignals, aber unlesbarer Modulation auf einen Störer erkannt wird, und dass je nach analysierter Unterbrechungsursache mit Hilfe eines in einer Geländedatenbank des Flugfübrungssystems mitgeführten Geländeprofils eine geeignete Berechnungsroutine für die Ermittlung der zurückführenden Ersatzroute ausgewählt wird,
- Funktionen zum Berechnen von Schatten- und Störaonen sowie von Ersatzflugrouten basierend auf einem in einer Geländedatenbank des Flugfiihnmgssystems mitgefolirten Geländeprofil vorgesehen ist,

## Claims

1. A remote-control method for controlling an unmanned aerial vehicle (UAV) from a control station (6) over radio paths by means of an on-board radio receiver, in which method image transmission takes place along the radio paths from the UAV (1) to the control station (6), wherein the UAV (1) is also automatically controllable by means of an on-board, preprogrammable flight guidance system, and the UAV (1) can either be flown under automatic control by the on-board flight guidance system along a preprogrammed safe route (3) or, if necessary, can be guided along a flight path (2) which is remotely controlled from the control station (6), wherein, in the event of the radio link between the UAV (1) and the control station (6) being interrupted, the flight is continued under control by the on-board flight guidance system along an alternative route which leads back to the safe route (3) and is calculated by on-board means without active remote-control intervention, **characterised in that** the radio interruption is analysed by means of the input signal of the radio receiver in such a way that, in the absence of an input signal, shadowing is identified and, in the presence of an input signal, but unreadable modulation, a source of interference is identified, and **in that**, depending upon the analysed cause of interruption, a suitable calculation routine for determining the alternative route leading back is selected with the aid of a terrain profile stored in a terrain ' database of the flight guidance system.

2. A remote-control method according to claim 1, **characterised in that** the radio interruption is analysed by the radio receiver itself.

3. A remote-control method according to any one of the preceding claims, **characterised in that** the calculated current flight path, together with the calculated expected shadow and interference zones, and the directly occurring source of interference are transmitted to the control station, where they are displayed.

4. A remote-control method according to any one of the preceding claims, **characterised in that** the alternative route is calculated as a precautionary measure during the uninterrupted radio link.

5. An unmanned aerial vehicle (UAV) with an on-board, preprogrammable flight guidance system with functions for carrying out a remote-control method for controlling an unmanned aerial vehicle (UAV) from a control station (6) over radio paths by means of an on-board radio receiver, in which method image transmission takes place along the radio paths from the UAV (1) to the control station. (6), wherein the preprogrammed flight guidance system comprises: .
- an interface for remote-control intervention by the control station (6) via the radio receiver;
- functions with which the aerial vehicle (UAV) is automatically controllable and with which, in the event of the radio link between the UAV (1) and the control station (6) being interrupted, the flight is continued under control by the on-board flight guidance system along an alternative route which leads back to the safe route (3) and is calculated by on-board means without active remote-control intervention,
**characterised in that** the preprogrammed flight guidance system comprises:
- functions for analysing the radio interruption by means of the input signal of the radio receiver in such a way that, in the absence of an input signal, shadowing is identified and, in the presence of an input signal, but unreadable modulation, a source of interference is identified, and **in that**, depending upon the analysed cause of interruption, a suitable calculation routine for determining the alternative route leading back is selected with the aid of a terrain profile stored in a terrain database of the flight guidance system;
- functions for calculating shadow and interference zones and alternative flight routes based on a terrain profile stored in a terrain database of the flight guidance system.

## Revendications

1. Procédé de téléguidage pour le pilotage d'un aéronef inhabité (UAV) au moyen d'un récepteur radio prévu à bord par des liaisons radioélectriques issues d'un radar de guidage (6), dans lequel s'effectue une transmission d'images sur les liaisons radioélectriques de l'UAV vers le radar de guidage (6), sachant que l'UAV (1) peut aussi être piloté automatiquement au moyen d'un système de guidage de vol embarqué préprogrammable, et que l'UAV (1) peut voler au choix sous pilotage automatique grâce au système de guidage de vol embarqué sur une route de sécurité (3) préprogrammée ou être guidé au besoin sur une ligne de vol téléguidée (2) par le radar de guidage (6), sachant que lors d'une interruption de la liaison radio entre l'UAV (1) et la station de guidage (6), le vol est poursuivi sous pilotage grâce au système de guidage de vol embarqué sur une route de remplacement calculée par les moyens embarqués, ramenant à la route de sécurité (3), sans l'intervention active du téléguidage, **caractérisé en ce qu'**une analyse de l'interruption radio s'effectue à l'aide du signal d'entrée du récepteur radio de manière à ce qu'en cas d'absence d'un signal d'entrée, une déconnexion est identifiée et en présence d'un signal d'entrée mais d'une modulation illisible, un brouilleur est identifié, et **en ce qu'**en fonction de l'origine de l'interruption analysée est sélectionnée une routine de calcul appropriée pour le calcul de la route de remplacement de retour à l'aide d'un profil de terrain figurant dans une banque de données de terrains du système de guidage de vol.

2. Procédé de téléguidage selon la revendication 1, **caractérisé en ce que** l'analyse est effectuée par le récepteur radio lui-même.

3. Procédé de téléguidage selon l'une des revendications précédentes, **caractérisé en ce que** la trajectoire de vol momentanée calculée ainsi que le brouilleur intervenant directement sont transmis au radar de guidage conjointement avec les zones de perturbation et d'ombres calculées attendues et y sont représentés.

4. Procédé de téléguidage selon l'une des revendications précédentes, **caractérisé en ce que** la route de remplacement est calculée de manière préventive pendant la liaison radio ininterrompue.

5. Aéronef inhabité (UAV) avec un système de guidage de vol préprogrammable embarqué, avec des fonctions pour l'exécution d'un procédé de téléguidage pour le pilotage d'un aéronef inhabité (UAV) au moyen d'un récepteur radio prévu à bord par des liaisons radioélectriques issues d'un radar de guidage (6), dans lequel s'effectue une transmission d'images sur les liaisons radioélectriques, de l'UAV (1) vers le radar de guidage (6), sachant que le système de guidage de vol préprogrammé comprend :
- une interface pour qu'intervienne le téléguidage effectué par le poste de guidage (6) par le récepteur radio,
- des fonctions avec lesquelles l'aéronef (UAV) peut être piloté automatiquement et avec lesquelles, lors d'une interruption de la liaison radio entre l'UAV (1) et le radar de guidage (6), le vol est poursuivi par pilotage grâce au système de guidage de vol embarqué sur une route de remplacement calculée avec des moyens embarqués, ramenant à la route de sécurité (3), sans l'intervention active du téléguidage,
**caractérisé en ce que** le système de guidage de vol préprogrammé comprend :
- des fonctions pour l'analyse de l'interruption radio à l'aide du signal d'entrée du récepteur radio de manière à ce qu'en cas d'absence d'un signal d'entrée est identifiée une déconnexion, en cas de présence d'un signal d'entrée, mais d'une modulation illisible, est identifié un brouilleur, et qu'en fonction de l'origine analysée de l'interruption, une routine de calcul appropriée pour le calcul de la route de remplacement de retour est sélectionnée à l'aide d'un profil de terrain figurant dans une banque de données de terrains du système de guidage de vol.
- des fonctions pour le calcul de zones de perturbation et d'ombres ainsi que des routes de remplacement se basant sur un profil de terrain figurant dans une banque de données de terrains du système de guidage de vol.
